# EUROPEAN PATENT APPLICATION

(11) **EP 4 105 527 A1**
(43) Date of publication of application: **21.12.2022**
(21) Application number: 22179349.0
(22) Date of filing: 16.06.2022
(51) Int. Cl.: F16K 5/06, F16K 31/60, F16K 35/02

(54) **VALVE HANDLE LOCKING MECHANISM**

(30) Priority: 17.06.2021 GB 202108669
(71) Applicant: Aalberts Integrated Piping Systems Limited, Doncaster South Yorkshire DN4 8DF (GB)
(72) Inventor: MACGREGOR, Robbie, Sheffield, S3 8RN (GB); CURRID, Steve, Mirfield, WF14 8PU (GB)
(74) Representative: Wilson Gunn

(57) **Abstract**

A valve handle locking mechanism and a method of production for the valve handle locking mechanism are provided. The locking mechanism uses a slider (14) positioned within an internal slot of an elongate lever (7) of the valve handle. The slider is arranged to slide back and forth in the internal slot, between a lock position and an unlock position. In the lock position, the slider engages with a stop (12a, 12b) on a valve body (2). In the unlock position, the slider is disengaged from any stops on the valve body.

## Description

### Technical Field of the Invention

The present invention relates to valve handle locking mechanisms, valve handles incorporating such mechanisms and to a method of providing a locking mechanism in a valve handle.

### Background to the Invention

Valves, and especially ball valves typically have stops for controlling the handle between fully opened and fully closed positions while still allowing intermediate positions if desired. In some, but not all, applications, a valve is left in one of a fully opened or a fully closed position. In most installations, it is undesirable to inadvertently change the selected fully open or fully closed position. However, in some installations it is desirable to frequently change the position of the valve, and to use partially open/closed positions. Prevention of inadvertent movement of a valve between these positions can be accomplished in a number of ways, including, for example, valve locks.

One example of a valve locking mechanism is disclosed in GB2566285B. GB2566285B discloses a locking mechanism for a valve handle, being suitable for a valve such as a ball valve. As shown in Figure 1, in the design of GB2566285B, a valve comprises a valve body 102 and a handle 107. The locking mechanism for the valve handle 107 includes stops 112a, 112b formed on the valve body at a right angle to one another, so as to correspond in the fully open and fully closed positions of the valve. The stops 112a, 112b are arranged to engage a pair of fork-like downwardly depending spaced apart tines of a slider.

The slider is formed in two parts 115, 116, which are connected together through a slot 120 extending through the handle 107 in the region where it is connected to the valve body 102.

In particular, the handle 107 of GB2566285B has a substantially cylindrical attachment portion 121 (for attachment to the stem 106 and hence the ball 103), and an integrally formed elongate lever 122, for the user to grip and turn. The lever 122 includes an intermediate upwardly inclined portion 124 which extends from the attachment portion 121. The slot 120 extends through the attachment portion 121 near the top of the handle 107, but just below the upwardly inclined portion 124 of the lever 122.

The handle-incorporated design of GB2566285B, when compared to locking collar type designs such as that disclosed in WO2015/0567610 helps to prevent pinching of a user's fingers during operation and facilitates one handed operation. As the movement of the locking mechanism is internal, it is less susceptible to dirt and detritus which could negatively impact smoothness of movement.

The handle-incorporated locking design of GB2566285B is, however fairly complicated to produce, requiring the machining of at least two separate parts for the locking mechanism, and as a result, has associated costs for tooling, manufacture and manufacturing time, as well as their assembly from opposite sides of the handle.

The present invention aims to provide an improved, or lower-cost valve handle locking mechanism and/or to overcome or ameliorate disadvantages associated with the prior art.

### Summary of the Invention

According to a first aspect of the invention, there is provided a valve handle locking mechanism, the locking mechanism comprising a slider positioned within an internal slot of an elongate lever of the valve handle, the slider arranged to slide back and forth in the internal slot, between a lock position, in which the slider is configured to engage with a stop on a valve body, and an unlock position, in which the slider is configured to be disengaged from a stop.

Providing a sliding locking mechanism which is positioned within the elongate lever allows use of a single-piece slider, as the boundaries of the elongate lever portion of the handle can contain the slider within its slot when fitted to a valve assembly. By comparison, the valve handle locking mechanism of GB2566285B requires multiple slider components which connect through the cylindrical attachment portion of the valve handle, whilst the mechanism of WO2015/0567610 and other external mechanisms carry a pinching risk. By comparison, the locking mechanism of the first aspect of the invention can be less costly to produce and easier to assemble.

Providing the slider within the elongate lever of the valve handle also means that the slider may be hidden, preventing potential interference and providing a streamlined appearance.

The valve handle may comprise a hub from which the elongate lever of the valve handle extends.

The elongate lever preferably extends radially from the hub. Alternatively, the elongate lever may extend tangentially from the hub.

The elongate lever preferably extends in a straight line from the hub. Most preferably in a straight line radially from the hub.

Alternatively, the elongate lever may be curved.

The internal slot in the elongate lever may have an open end.

The open end may be configured to receive the slider. A portion of the slider, for example an engagement portion, may be configured to slide out away from the open end into the unlock position and to slide towards the open end into the lock position.

The open end of the internal slot is preferably arranged radially inwardly. For example, the open end of the internal slot may open into a cavity of the hub.

The internal slot may extend in a direction away from the hub of the valve handle into the elongate lever of the valve handle.

The direction in which the internal slot extends is preferably the same as the direction in which the elongate lever extends. For example, the internal slot may extend radially. The elongate lever and the internal slot may have parallel, or co-axial longitudinal axes.

An internal slot which follows the directionality of the elongate lever supports the construction of levers with greater balance and structural rigidity, but there may be instances where a linear slot is preferable for machining into a non-linear lever. The location of an open end of the slot within a cavity of the hub also enables easy insertion of the slider during manufacture, while ensuring that the open end is concealed once the handle has been fitted.

The elongate lever of the valve handle may comprise a grip section. The grip section may extend from the hub. Preferably the elongate lever comprises an intermediate portion. The intermediate portion is preferably located between the hub and the grip section of the elongate lever.

The intermediate portion and grip section of the elongate lever may extend in the same direction, but preferably extend in different directions. Most preferably, the intermediate portion and the grip section extend in different directions, but in the same plane.

The intermediate portion preferably extends in a direction which is radial with respect to the axis of valve rotation. The intermediate portion preferably extends in a direction which is non-perpendicular to the axis of valve rotation, for example, radially and axially away from the valve body (in use). The intermediate portion most preferably extends in a direction which is radial and non-perpendicular to the axis of valve rotation.

The grip section of the elongate lever preferably extends in a direction which is radial with respect to the axis of valve rotation. The grip section of the elongate lever preferably extends in a direction which is perpendicular to the axis of valve rotation. The grip section of the elongate lever most preferably extends in a direction which is radial and perpendicular to the axis of valve rotation.

In the most preferable arrangement, therefore, the intermediate portion and the grip section both extend in a radial plane, but at different angles.

The internal slot may extend in into the intermediate portion of the of the elongate lever. The direction of in which the internal slot extends is preferably the same as the direction in which the intermediate portion extends. For example, the internal slot and the intermediate portion may have parallel, or co-axial longitudinal axes.

An intermediate portion enables different configurations of valve handle design, such that the elongate lever of the handle may extend above the hub of the valve handle while providing a suitable grip section of the elongate lever which is preferably perpendicular to the axis of valve rotation. For an uprightly oriented valve, with an intermediate portion extending radially and axially away from the valve body, with a slot having its open end face radially inward, the slot will be angled downwards towards the axis of the valve body enabling gravity to coax the slider into the locked position by default.

The slider may be formed as a single piece.

By having a slider which is formed as a single piece, the slider may be formed, for example stamped, in a single step, thereby reducing the number of steps required during valve handle production.

The valve handle may comprise an aperture. The aperture may be provided in the elongate lever. The aperture may be provided in the intermediate portion of the elongate lever. The aperture may open onto the internal slot in the elongate lever. The aperture may be provided in an upwardly facing surface of the elongate lever (in use when the axis of rotation is the vertical axis). The slider may comprise an aperture.

The apertures may be configured to align when the slider is in the lock position.

The apertures enable a user to padlock the slider into place, holding it in the locked position and thereby preventing further adjustment of the valve handle.

The slider may be planar. For example, the slider may be rectangular.

The slider may comprise a tab which protrudes from the plane of the slider.

The tab may be integral with the slider, for example formed from the same sheet of material.

The tab may be adjacent to the aperture of the slider.

The tab may protrude perpendicular to the direction in which the slider is arranged to slide. The tab may alternatively protrude in a direction which is skewed to the direction in which the slider is arranged to slide.

The elongate lever may comprise a window. The window may open onto the internal slot. The window may be provided in the intermediate portion of the elongate lever. The window may define one or more limits to a range in which the slider may slide. The limits may confine a range of movement of the tab.

The protruding tab may provide a purchase point for a user when sliding the slider within its slot. A tab which is skewed or perpendicular to the direction of sliding would also be easy to machine, simply bending an originally flat tab portion of the slider during assembly.

The tab may extend through the window.

The window may be arranged in a surface of the elongate lever opposite to the aperture in the valve handle. As such the hasp of a padlock can extend through the aperture, in the valve handle, the aperture in the slider and the window.

The window is preferably be located in a downwardly facing surface of the elongate lever (in use when the axis of rotation is the vertical axis).

The tab and window may alternatively be located on the top or side of the elongate lever.

Positioning of the tab and its window at the bottom of the handle would keep it hidden from view, while positioning at the top of side may enable easy access and a visual preview of whether the slider is in a lock or unlock position.

The elongate lever preferably encloses the remaining portions of the internal slot which are not the open end of the slot, the window and the aperture.

The invention extends to a valve having a valve body comprising at least one stop and a valve handle comprising the valve handle locking mechanism as set out above.

The valve may be a ball valve.

The cavity of the hub may enclose the at least one stop within its boundary.

The at least one stop may be a protrusion. Alternatively, the stop may be a socket.

The potential for one or more stops enables valve handle lock positions at a range of flow configurations, including no flow, full flow or half-flow as non-limiting examples.

The engagement portion may be a pair of spaced apart prongs, for engaging with a stop on the valve body. The prongs may extend in the plane of the slider. This simplifies construction.

A pair of prongs holding against a protruding stop provides an efficient holding mechanism, but alternatively a single projection may be provided which slides into stops formed as sockets in the valve body, making an efficient holding mechanism in an alternative approach.

The slider may preferably be configured to engage with a stop by bridging a gap within the cavity of the hub between the open end of the internal slot and the stop.

The apertures in the handle and slider may be configured to align to receive a padlock when the slider is in the lock position, and may be arranged to be misaligned (and hence inaccessible for the hasp of a padlock) when the slider is not in the lock position.

The slider may have a second aperture configured to align with the aperture of the handle when the slider is in the unlock position. The second aperture of the slider could also be configured to receive a padlock.

This would enable a user to selectively secure the valve handle in an unlocked position or a locked position. It may be advantageous to padlock the slider in the unlock position when making quick adjustments.

A portion or all of the elongate lever may be transparent or translucent.

This would enable a skilled user to view the position of the slider through the elongate lever of the valve handle, while retaining structural rigidity of the valve handle.

The elongate lever of the valve handle may be at least partially formed from plastic, for example glass reinforced plastic.

The use of plastic within the elongate lever of the valve handle would help to reduce its weight and may potentially provide a more comfortably gripping surface.

The slider may be formed of metal or another strong material.

According to a second aspect of the invention, there is provided a method of providing a locking mechanism in a valve handle, the method comprising providing an internal slot in an elongate lever of the valve handle and inserting a slider into the internal slot, such that the slider is arranged to slide back and forth in the internal slot between a lock position, in which the slider is configured to engage with a stop, and an unlock position, in which the slider is configured to be disengaged from a stop.

The method may comprise forming a slit in the slider to define a tongue section. The slider may be planar. The slit may extend through the plane of the slider.

The method may comprise inserting a slider comprising a slit forming a tongue section into the internal slot.

The slit may be C-shaped or U-shaped.

The method may comprise bending the tongue section to form a protruding tab. The step of bending the tongue is preferably conducted after insertion of the slider. The step of bending the tongue preferably forms a tab which extends through a window in the elongate lever. The step of bending the tongue to form a tab preferably constrains the slider within the elongate lever.

Preferably the tongue is bent to form a tab which protrudes through a window in the elongate lever of the valve handle. This results in a protruding purchase point for user.

Preferably the slider is inserted into the elongate lever, then a tool is inserted through the/an aperture in the elongate lever to bend the tongue out through the window in the elongate lever of the valve handle, to form the tab.

The method may comprise stamping the slider from a sheet of material.

The locking mechanism in the valve handle of the second aspect of the invention may be the locking mechanism in the valve handle as defined in the first aspect of the invention, including any optional features.

### Detailed Description of the Invention

In order that the invention may be more clearly understood an embodiment thereof will now be described, by way of example only, with reference to the accompanying drawings, of which:

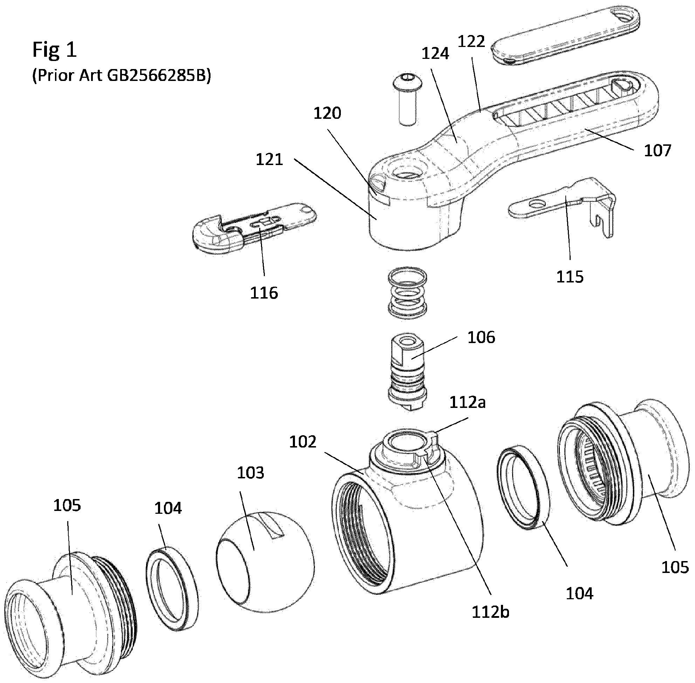

- Figure 1: shows a prior art locking mechanism;
- Figure 2: shows an exploded perspective view of a ball valve and its associated handle, the handle comprising a locking mechanism;
- Figures 3A-C: show the slider of figure 2, with figure 3A showing the slider before a tab is formed, figure 3B showing a perspective from above after formation of a tab and figure 3C showing a perspective from beneath after formation of the tab;
- Figures 4A-B: show part-cutaway side perspective views of the locking mechanism of figure 2 in operation, with figure 4A showing the locking mechanism in a locked position and figure 4B showing the locking mechanism in an unlocked position;
- Figures 5A-B: show part-cutaway close-up side-perspective views of the locking mechanism of figure 4A with figure 5B showing a further padlock securing the slider in place;
- Figures 6A-D: show underside perspective views of the valve handle at different stages of slider installation, with figure 6A showing separate slider and handle, figure 6B showing the insertion of the slider into a slot of the handle, figure 6C showing alignment of the slider tab over the aperture and figure 6D showing an inserted slider with the slider tab bent into operational position.

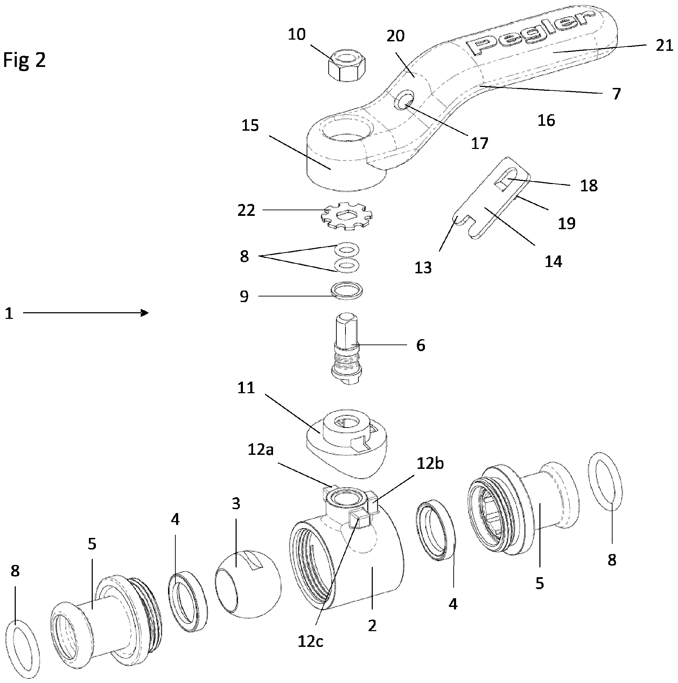

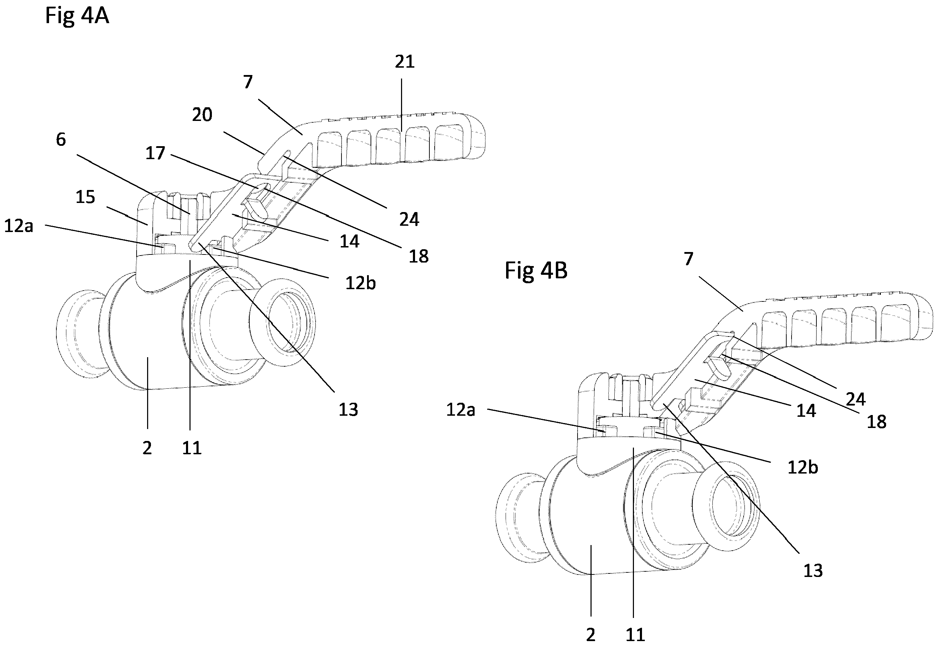

The preferred embodiment relates to a valve handle locking mechanism and its preferred method of assembly. These are described below with reference to figures 2-6D. The locking mechanism of the preferred embodiment comprises a slider 14 positioned within an internal slot 24 of an elongate lever 7 of a valve handle. The slider 14 is arranged to slide back and forth in the internal slot 24, between a lock position and an unlock position. Figure 4A depicts the lock position in which the slider 14 is configured to engage with a stop 12b on a valve body 2. Figure 4B depicts the unlock position in which the slider 14 is configured to be disengaged from a stop 12a-c.

With reference to the accompanying figures, a valve 1 is shown. In this case as can be seen from figure 2, the valve 1 is a ball valve, comprising a valve body 2, a ball 3, seals/spacers 4 and connectors 5 for connection to pipework (not shown). The connectors 5 may utilise seals 8 when securing the connectors to pipework. It would be appreciated that a variety of rotating-handle valve types may incorporate the locking mechanism as described in detail below, including but not limited to butterfly valves, globe valves, plug valves and gate valves.

A stem 6 connects the ball 3 to a valve handle, which is made up of an elongate lever 7 which extends from and is formed integrally with a hub 15. The elongate lever 7 extends radially from the hub. Seals 8 a spacer 9 and a toothed reinforcing disc 22 are provided between the stem 6, the valve body 2 and the handle to avoid leaks. The hub 15 of the elongate lever 7 is attached to the stem 6 by a threaded fastener 10. The disc 22 is made from stainless steel and acts to reinforce the handle around the spindle.

The locking mechanism of the elongate lever 7 is configured to engage with stops 12a-c formed on the body of the valve at right angle intervals, so as to correspond in the fully open and fully closed positions of the valve 1. The stops 12a-c extend from the upper surface of the valve body 2, which is lower than the elongate lever 7 in the "normal" orientation for use (although the valve could be installed in various different orientations).

In this embodiment, a stop cap 11 is placed over the stops 12a-c and a portion of the valve body 2. The stop cap 11 comprises a hole to accommodate insertion of the stem 6. The stop cap 11 further comprises a flat surface comprising holes for protrusion of the stops 12a-c, the flat surface of the stop cap 11 enabling a consistent height for rotational engagement between the stops 12a-c and a slider 14, and further ensuring a close rotational fit between the hub 15 and the stop cap 11, as shown in figures 4A-4B. This close fit may thereby prevent dust or other loose material from entering around the hub 15 of the valve 1. The stops 12a-c are arranged to engage with an engagement portion 13 of the slider 14. Stop cap 11 is also used to provide a "clean" look to the ball valve.

Figure 4A shows a part-cut away image of the elongate lever 7 attached via the hub 15 to the stem 6. The elongate lever 7 of this embodiment is constructed from plastic, for example glass reinforced plastic and for example by injection moulding as an integral valve handle incorporating the lever 7 and hub 15. The elongate lever 7 of figure 4A extends outwardly from the hub 15. The elongate lever 7 takes the form of a grip section 21 (to be manipulated by a user) joined to the hub via an intermediate portion 20.

The intermediate portion 20 and the grip section 21 extend in different directions, but in the same radial plane. The hub 15, stem 6 and ball 3 rotate about an axis of rotation. As depicted in figures 4A-B, the intermediate portion extends radially from the hub but in a non-perpendicular direction relative to the axis of rotation, said differently, the intermediate portion may extend upwardly outwards from the hub 15 (when arranged with the axis of rotation vertical and the handle at the top). The grip section 21 is shown in figures 4A-B to extend in a radial and perpendicular direction relative to the axis of rotation, said differently, the grip section 21 may extend horizontally outwardly from the hub 15 (when the axis of rotation is vertical).

The hub 15 has a substantially cylindrical shape about the axis of rotation. The upper face of the hub comprises a downwardly facing socket located in its centre which is configured to house a nut 10 when the handle is attached to the stem 6. The downwardly facing socket comprises a stem aperture to enable the stem 6 to protrude through the hub 15 for connection to the nut 10. The stem aperture extends along the rotational axis of the hub 15.

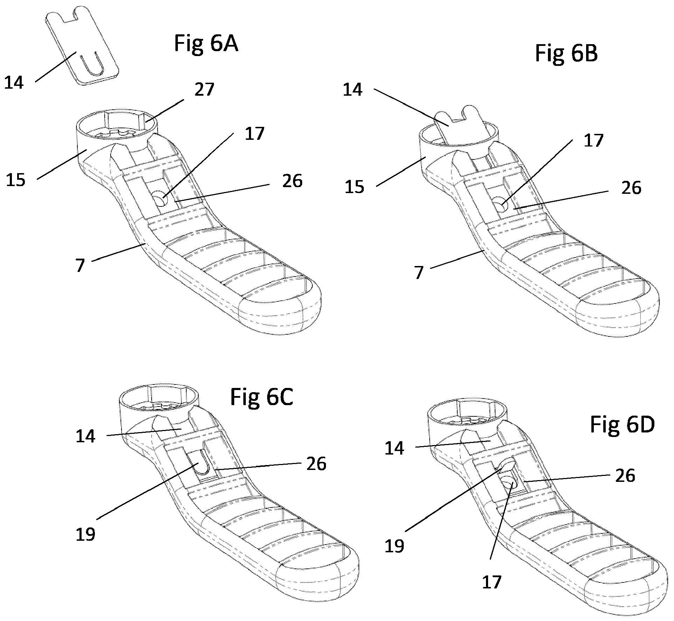

As shown in figures 6A-C, the hub 15 also comprises a cavity 27 (i.e. a hollowed-out section) located on the bottom face of the hub's cylindrical shape. The cavity 27 is configured to comprise sufficient dimensional space such that it encloses the least one stop 12a-c when fitted to the stem 6 and such that it may receive the slider 14. An internal wall of the cavity 27 comprises a "slot opening" or open end of the slot 24. The open end of the slot has dimensions which enable the slider 14 to be inserted through into the slot 24 through the open end. The open end of the slot 24 is orientated such that it faces radially inward toward the axis of rotation. The open end of the slot 24 is located such that the slot 24 extends into the intermediate portion 20 of the elongate lever such that the slider 14 may be inserted into the internal slot 24 of the elongate lever 7.

In the preferred embodiment, the intermediate portion 20 of the elongate lever 7 comprises the internal slot 24 which is configured to house the slider 14. The internal slot 24 extends from the open end of the internal slot 24 (which is located at the radially inward end of the intermediate portion 20) and opens into the cavity 27 of the hub 15. The internal slot 24 extends into the intermediate portion 20 in the direction of extension of the intermediate portion 20, with the longitudinal axis of the intermediate portion 20 being co-axial with that of the slot.

The slot is preferably linear and planar, having a height and width which accommodate insertion of the slider 14 along its length and constrain the slider whilst allowing it to move back and forth. In this embodiment, the height of the slot is approximately 2mm, the width is approximately 16mm, and the length is approximately 34mm, so it has a broadly rectangular shape. But of course, those skilled in the art will appreciate that other shapes and sizes can be adopted as best suit the size and shape of handle and slider.

The length of the slot is approximately equal to that of the slider, such that it accommodates the length of the slider 14 and thus enables the engagement portion 13 of the slider to disengage with the stops 12a-c when it has been slid away from the hub 15 (and to engage with the stops 12a-c when slid into the hub 15).

The intermediate portion 20 comprises an aperture 17 (best shown in figure 2 and figures 6A-D) located on its upper surface (upper and lower being defined relative to a handle which is fitted to rotate in a horizontal plane with the handle located vertically above the valve body). The aperture 17 in this embodiment is circular in shape and opens through the upper surface of the intermediate portion into the slot 24. The aperture 17 extends through the intermediate portion 20 at an angle which is perpendicular to the direction in which the intermediate portion 20 extends.

The intermediate portion comprises a window 26 on its lower surface. The window 26 opposes the aperture 17. The window 26 of this embodiment is elongate, being rectangular in shape and opens through the lower surface of the intermediate portion into the slot 24. The window 26 is sufficiently wide (relative to the longitudinal axis along which it extends) to enable a tab 19 of the slider 14 to protrude through it and slide along its length. The window 26 is sufficient in length such that confining ends of the window 26 enable the engagement portion 13 of the slider 14 to engage with the stops 12a-c when the tab 19 is positioned at the end of the window 26 which is closest to the hub 15 and enable the engagement portion 13 of the slider 14 to disengage with the stops 12a-c when the tab is positioned at the end of the window 26 which is furthest away from the hub 15.

The intermediate portion 20 of the elongate lever 7 preferably encloses remaining portions of the internal slot 24 which are not the open end of the slot, the slot window 26 and the aperture 17.

The aperture 17 and the window 24 are aligned relative to the slot 24 such that they enable clean passage through the aperture 17 on the upper surface of the of the intermediate portion 20 and the window 26 when the slider 14 is not obstructing them.

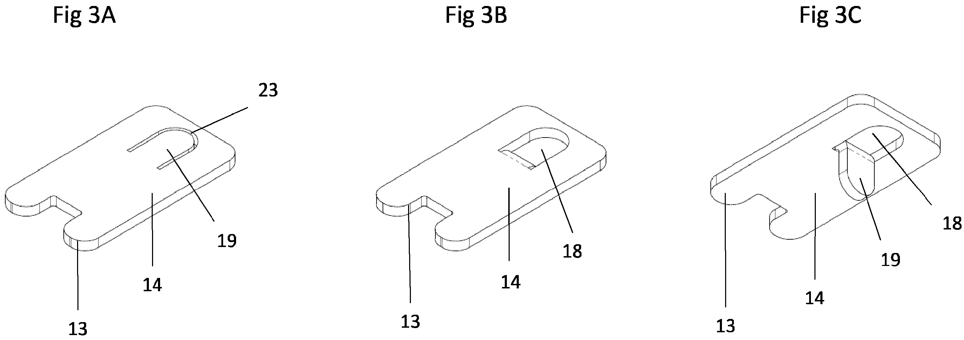

The slider 14 is planar, and before processing during installation, as shown in figure 3A, the slider 14 is a substantially rectangular shape with the prongs that form the engagement portion 13 extending from one short end of the rectangular shape, and a U-shaped slit 23 arranged towards the opposite end of the rectangular shape, defining a tongue 19, which as discussed below is transformed into a tab 19 during assembly. Different tab outline shapes and hence shapes of slit may be utilised. When formed into a tab 19, as shown in figures 3B and 3C, the tongue is bent out of the plane of the slider 14, leaving an aperture 18 in the slider 14 in the shape defined by the slit and an adjacent tab 19 which protrudes at an angle which is non-parallel to the plane of the slider 14. In this particular embodiment, the tab 19 protrudes perpendicular to the plane of the slider.

The aperture 18 of the slider 14 is positioned such that it aligns with both the aperture 17 and window 26 of the intermediate portion when the slider is positioned in the lock position, and such that it does not align with the aperture 17 in the intermediate portion when the slider is positioned in an unlock position.

The slider 14 may be cut or formed as a single piece from a single sheet of metal, as a preferred material.

The slider 14 of this embodiment is designed to located and used within the internal slot 24 of the elongate lever 7 of this embodiment, as depicted in figures 4A-B.

The engagement portion 13 of the slider 14 is configured to engage with the stops 12a-c when the slider is inserted into a handle on a valve. In the preferred embodiment the engagement portion 13 takes the form of a pair of prongs extending radially inwardly, when in use. The slider 14 is shown in detail in figures 3A-C.

Figures 6A-D show an underneath view of the elongate lever 7 of the preferred embodiment in various stages of installation of the slider 14 of the locking mechanism. The slider 14 is preferably constructed, via stamping or cutting from a single piece of metal sheet or another strong material. As noted above, the handle can be formed by injection moulding from a plastic material. In this embodiment, whilst the top surface, sides and ends of the handle are smooth and rounded, the underside is provided with a plurality of laterally extending ribs, which offer weight saving as compared to a solid handle having the same outline, or greater strength compared to a valve handle of the same shape without the ribs. The ribs which are located at both ends of the slot 24 also act to prevent the slider 14 from falling out of its functional position once the tab 19 has been bent outwards.

As shown in figure 6B, the slider 14 is introduced through the open end of the internal slot 24 into the internal slot 24 of the elongate lever such that it may slide back and forth in the internal slot 24 between a lock and an unlock position (as described previously). The slider 14 is then slid into a position, shown in figure 6C, in which the tongue-like tab 19 may be accessed via both the window 26 and the aperture 17 of the intermediate portion 20 (this position would correspond to the lock position in use).

Next, as shown in figure 6D, with the slider 14 *in-situ,* a tool (not shown) is introduced through the aperture 17 to bend the tongue 19 through the window 26 to form a tab 19. The tab 19 protrudes with an orientation which is directed out of the window 26 and thus, once formed, the slider 14 cannot fall out of the valve handle, as it is constrained by the dimensions of the window.

Fitting the slider 14 into the slot of the elongate lever 7 forms a valve handle sub-assembly which can be easily handled, for example allowing batches of valve-handle sub-assemblies to be placed into containers or packages for transport to valve assembly stations (or even sold separately as spare parts).

To finish assembly of the locking mechanism to the valve, the hub 15 may be connected to the stem 6 using the nut 10 to hold it in place. The connected valve handle is then ready to be used for valve turning and locking.

A demonstration of the valve locking mechanism in action may be seen in figures 4A-5B.

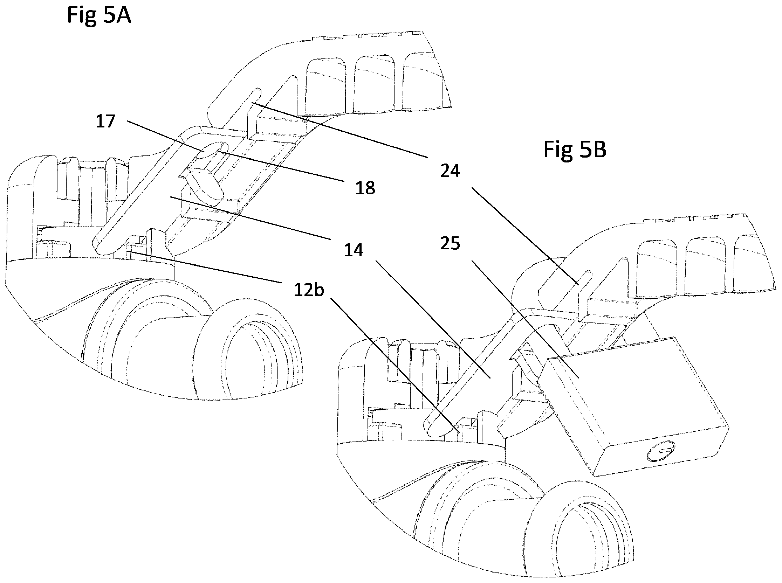

In figures 4A, 5A and 5B, the slider 14 is located in the lock position bridging the gap between the open end of the slot 24 and the stop 12b, with the prongs of the engagement portion 13 engaging with the stop 12b, one prong either side of the projecting stop, to prevent the handle from rotating in either direction. While in the slider 14 is in the lock position, the aperture 18 of the slider 14 aligns with the aperture 17 of the intermediate portion 20 as shown in figure 5A. As seen in figure 5B, the alignment of the apertures 17 and 18 enables the insertion of the hasp of a padlock 25 to hold the slider in position and prevent further handle rotation unless/until it is removed.

In order to enable handle rotation, the slider 14 needs to be moved from the lock position. When the slider 14 is not held in position by a padlock 25, the tab 19 may be used as a purchase point for a user to slide the slider within the slot 24.

When a user slides the slider 14 away from the hub 15, the prongs of the engagement portion 13 are disengaged from the stop 12b. This results in the slider 14 being located in the unlock position, as shown in figure 4B. When the slider is in the unlock position, the valve handle, and accordingly, the ball of the valve may be rotated.

After rotating the handle, the user may use the tab 19 of the slider 14 to slide the slider 14 radially inwardly and engage the engagement portion 13 of the slider 14 with a stop 12a-c again. This way the user may lock the handle into a fixed rotational position, and secure this position with a padlock if desired. With the valve arranged as shown in figures 4A-5B, the slider 14 will automatically be urged by gravity into the lock position in which it is engaged.

Throughout this specific description, the terms up/down etc. have been used with reference to the directions shown in the figures, but those skilled in the art will appreciate that valves 1 can be arranged at various angles on pipes, and, for example, may be arranged on vertically extending pipes, which would change the bias on the slider applied by gravity. Clearly, the terms up/down etc. are used not in a limiting sense, but for the sake of explaining one particular arrangement shown.

The above embodiment is described by way of example only. Many variations are possible without departing from the scope of the invention as defined in the appended claims.

## Claims

1. A valve handle locking mechanism, the locking mechanism comprising a slider positioned within an internal slot of an elongate lever of the valve handle, the slider arranged to slide back and forth in the internal slot, between a lock position, in which the slider is configured to engage with a stop on a valve body, and an unlock position, in which the slider is configured to be disengaged from a stop.

2. A valve handle locking mechanism according to claim 1, wherein the valve handle comprises a hub from which the elongate lever of the valve handle extends and wherein an open end of the internal slot opens into a cavity of the hub.

3. A valve handle locking mechanism according to claim 2, wherein the internal slot extends in a direction away from the hub of the valve handle into the elongate lever of the valve handle.

4. A valve handle locking mechanism according to any preceding claim, wherein a direction in which the internal slot extends is the same as a direction in which the elongate lever extends.

5. A valve handle locking mechanism according to any preceding claim, wherein the internal slot extends into an intermediate portion, the intermediate portion being located between the hub and a grip section.

6. A valve handle locking mechanism according to claim 5, wherein the intermediate portion extends in a different direction to the grip section, and/or wherein the intermediate portion extends in a direction which is radial and non-perpendicular to an axis of valve rotation.

7. A valve handle locking mechanism according to any preceding claim wherein the slider is formed as a single piece.

8. A valve handle locking mechanism according to any preceding claim wherein the valve handle comprises an aperture which opens onto the internal slot; wherein the slider comprises an aperture and wherein the apertures are configured to align when the slider is in the lock position.

9. A valve handle locking mechanism according to claim any preceding claim wherein the slider comprises a tab which protrudes from a plane of the slider.

10. A valve handle locking mechanism according to claim 9 when dependent on claim 8, wherein the tab is adjacent to the aperture of the slider.

11. A valve handle locking mechanism according to any preceding claim, wherein the elongate lever comprises a window which opens onto the internal slot.

12. A valve handle locking mechanism according to claim 11 when dependent on either of claims 9 or 10, wherein the tab extends through the window.

13. A valve comprising a valve body, at least one stop and a valve handle comprising the handle locking mechanism according to any preceding claim.

14. A valve according to claim 13 wherein valve is a ball valve.

15. A method of providing a locking mechanism in a valve handle, the method comprising providing an internal slot in an elongate lever of the valve handle and inserting a slider into the internal slot, such that the slider is arranged to slide back and forth in the internal slot between a lock position, in which the slider is configured to engage with a stop, and an unlock position, in which the slider is configured to be disengaged from a stop.
